# NEW EUROPEAN PATENT SPECIFICATION

(11) **EP 2 946 450 B2**
(45) Date of publication and mention of the opposition decision: **23.10.2019**
(45) Mention of the grant of the patent: 21.09.2016
(21) Application number: 14700156.4
(22) Date of filing: 08.01.2014
(51) Int. Cl.: H02G 3/32, H01B 17/26, H02G 15/007, H02G 1/14, H02G 3/06

(54) **CABLE CLAMP**
KABELKLEMME
SERRE-CÂBLE

(30) Priority: 15.01.2013 GB 201300691
(43) Date of publication of application: 25.11.2015
(73) Proprietor: Technetix B.V., NL-3905 NR Veenendaal (NL)
(72) Inventor: CHAPMAN, Paul, Burgess Hill Sussex RH15 9TZ (GB); SHELLEY, Gareth, Burgess Hill Sussex RH15 9TZ (GB)
(74) Representative: Forsyth, Helen Jane
(86) International application number: PCT/EP2014/050205
(87) International publication number: WO 2014/111293

(56) References cited:
- DE-A1-102006 026 250
- DE-U1- 8 206 014
- JP-A- H08 103 018
- US-A- 5 440 666
- US-A- 5 677 975
- US-A- 5 729 872
- US-A1- 2012 104 212
- US-B1- 6 266 471

## Description

### Field of the Invention

This invention relates to a cable clamp, particularly, but not exclusively, for use with coaxial cables.

### Background to the Invention

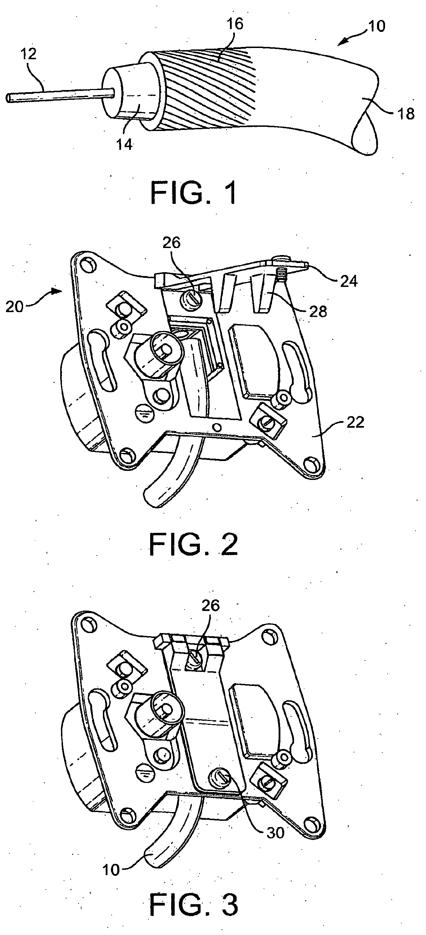

Coaxial cables are widely used, particularly for transmitting radiofrequency (RF) signals. Figure 1 shows the construction of a typical coaxial cable 10, which comprises a centre conductor 12, e.g. of copper, surrounded by a tubular electrically insulating layer 14, a tubular screening braid 16, e.g. of woven copper, and an outer insulating sheath 18, e.g. of plastics material. In Figure 1, the end of the screening braid 16 is shown folded back over the outer sheath 18.

Common uses of coaxial cables include video and cable television (CATV) distribution, RF and microwave transmission, and computer and instrumentation data connections.

In CATV installations there are two standard approaches to terminating coaxial cables used for signal distribution. The first approach is to fit a connector (male or female) onto the cable and then mate it with a compatible connector on the equipment. The second approach is to terminate the cable directly into the equipment (or a wall outlet or other intermediate component) securing it with some kind of internal clamping device. The present invention is concerned with the second approach.

In the second approach, in conventional CATV equipment, the centre conductor of the coaxial cable mates with a screw terminal or sprung contact, with the screening braid earthed by a clamping mechanism.

Figures 2 and 3 show a conventional isolated wall outlet, the construction of which is representative of many types of CATV equipment where cables are terminated using the second approach. The outlet comprises a clamp body 20 having a main body portion 22 and a clamp closure portion 24 hingedly connected thereto. The end of a coaxial cable 10, prepared as illustrated in Figure 1, is fitted into the clamp as shown in Figure 2, with the centre conductor mating with a contact and held in place with screw 26. The closure portion 24 has a profiled underside 28 that clamps around the cable body, around the folded back screening braid, when the closure portion is hinged closed and secured in position by screw 30, as shown in Figure 3.

In order to make a good seal to prevent ingress or egress of RF radiation, the cable clamping arrangement must close all around the coaxial cable making good contact with the braid, with no gaps where RF signal can penetrate.

A problem with this type of mechanism is that coaxial cables are available in a range of different sizes and it is very difficult to make a cable clamp that holds all different sizes firmly and provides a good RF radiation seal. Additionally, many known clamps have a flat or oval profile on two sides, which distorts the shape of the circular coaxial cable when tightened, causing the RF performance of the cable to be compromised.

This invention aims to address these problems.

Another example of a prior art clamp according to the preamble of claim 1 is disclosed in US 5,440,666

### Summary of the Invention

In a first aspect, the present invention provides a cable clamp according to claim 1.

By having gripper members moveable to define a constrictable aperture, ie an aperture that can be reduced in size, the clamp can adjust to accommodate cables of different diameter and hold them firmly to create an effective RF radiation seal without causing distortion of the cable.

The cable clamp may be used with a variety of different cable types, including mains electrical cable, but finds particular application with coaxial cables. The clamp is typically used to receive an end of the cable, and in this case conveniently includes a conductive contact for mating with the exposed centre conductor of a coaxial cable.

The cable opening is preferably of circular form, for use with circular cylindrical cables. The aperture is preferably of circular or approximately circular form.

The gripper members preferably have a curved cable-engaging face, preferably of part circular cylindrical or approximately circular cylindrical form.

The gripper members are typically mounted within the clamp body, for movement relative thereto.

The gripper members are preferably arranged at intervals around the periphery of the opening, desirably being arranged with equal or approximately equal spacing so as to exert an approximately uniformly spaced force on the cable so as not to distort the profile of the cable.

The gripper members preferably progressively overlap the adjacent grippers on constriction.

The gripper members are preferably mechanically interconnected so that they move together to constrict the aperture. Movement thereof is conveniently produced by a threaded actuating member such as a screw.

A pair of similar second gripper members are provided for rotary movement in opposite senses, preferably in offset planes to permit overlap.

The gripper members are preferably mechanically interconnected so that liner sliding movement of the first gripper member causes rotary sliding movement of the second gripper member (preferably pair of second gripper members).

The second gripper members are of tapered form, to define a narrowing aperture on rotary sliding movement.

The second gripper members are conveniently arranged to slide on a circular cylindrical track. The second gripper members thus preferably have a circular cylindrical outer face for sliding on the track and a smaller radius inner circular cylindrical cable-engaging face, with the two cylinders having offset centres to produce a tapered form. In a preferred arrangement a pair of similar such second gripper members are provided, oriented to rotate in opposite senses in offset planes, with the cable-engaging faces overlapping on constriction of the aperture.

The second gripper member or members are conveniently located in a cylindrical recess in the clamp body. The clamp body desirably includes a part circular guide for the or each second gripper member, eg in the form of a part circular slot for receiving a correspondingly shaped flange extending from the second gripper member.

The first gripper member conveniently includes a portion, eg a projection, for engaging an associated second gripper member and causing rotary sliding movement thereof on linear sliding movement of the first gripper member.

In a preferred arrangement, the first gripper member has a pair of offset projections, each for engaging an associated second gripper member.

The first gripper member is preferably located in a slot-shaped recess in the clamp body, for linear sliding movement.

Linear sliding movement of the first gripper member (and hence rotary sliding movement of the second gripper member or members) is conveniently produced by tightening a threaded member associated with the first gripper member, eg in the form of a captive screw.

The preferred arrangement provides a simple yet effective and robust mechanical interconnection.

The clamp body may comprise two or more components, including a main body portion and a clamp closure portion moveable relative thereto, e.g. hinged thereto, between open and closed conditions for ease of access and fitting of a cable. The body components can conveniently be secured together in closed condition, defining the cable opening, e.g. by means of a clamp closure screw.

The cable clamp may be a separate component, eg in the form of a wall clamp, or may be integrated with an item of CATV equipment.

The invention in a further aspect thus provides a cable television component comprising a clamp in accordance with the invention.

A preferred embodiment of cable clamp in accordance with the present invention will now be described by way of illustration with reference to the accompanying drawings, in which:
Figure 1 shows the construction of a coaxial cable;
Figure 2 is a perspective view of a coaxial cable wall outlet incorporating a known cable clamp, shown in open condition;
Figure 3 is a view similar to Figure 2, with the clamp in closed condition;
Figure 4 is a perspective view of a coaxial cable wall outlet incorporating a cable clamp in accordance with the invention, with the clamp in open condition;
Figure 5 is a side view of the outlet of Figure 4, with the clamp in closed condition;
Figure 6 is an enlarged scale side view of a detail of Figure 5, showing the clamp gripper members in partially constricted condition;
Figure 7 is a view similar to Figure 6, showing the clamp gripper members in fully constricted condition;
Figures 8A, B and C show a detail of the clamp of Figures 4 to 7, with the gripper members in non-constricted condition, partially constricted condition and fully constricted condition, respectively;
Figures 9A to G show a rotating gripper member of the clamp of Figures 4 to 8 in perspective, top plan, end, side, other end, other side and bottom plan views, respectively;
Figures 10A to F show a top gripper member of the clamp of Figures 4 to 8 in perspective, top plan, bottom plan, end, side and sectional (along line A-A of Figure 10E) views, respectively;
Figures 11A to H show part of the clamp body of the clamp of Figures 4 to 8 in perspective from above, perspective from below, top plan, bottom plan, side, other side, end and sectional (along line A-A of Figure 11 C) views, respectively; and
Figure 12 is an enlarged scale view of the top gripper member of Figure 10 with associated screw.

### Detailed Description of the Drawings

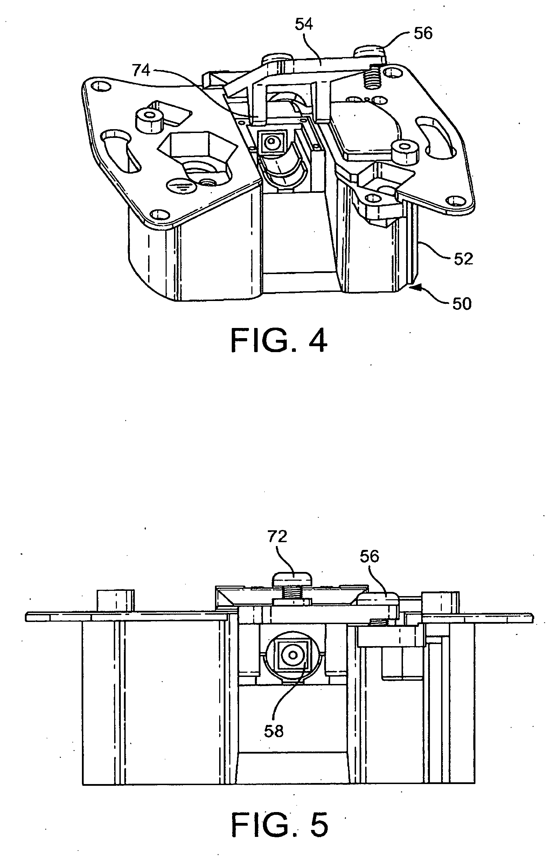

Figures 4 to 12 illustrate a coaxial cable wall outlet incorporating a preferred embodiment of cable clamp in accordance with the invention for securing an end of a coaxial cable.

The outlet comprises a clamp body 50 having a main body portion 52 and a clamp closure portion 54 hingedly connected thereto for movement between an open condition, as shown in Figure 4, to permit fitting of a cable end, and a closed condition, as shown in Figure 5, for clamping a cable therebetween, with the portions 52 and 54 being held together in the closed condition by a cable body closure screw 56 passing through aligned openings in the portions 52 and 54.

In the closed condition, as shown in Figure 5, the portions 52 and 54 define a circular opening 58 for an end portion of a cable (not shown). The clamp body 50 includes a cylindrical recess 60 with an internal conductive contact 62 for mating with the exposed centre conductor of a coaxial cable.

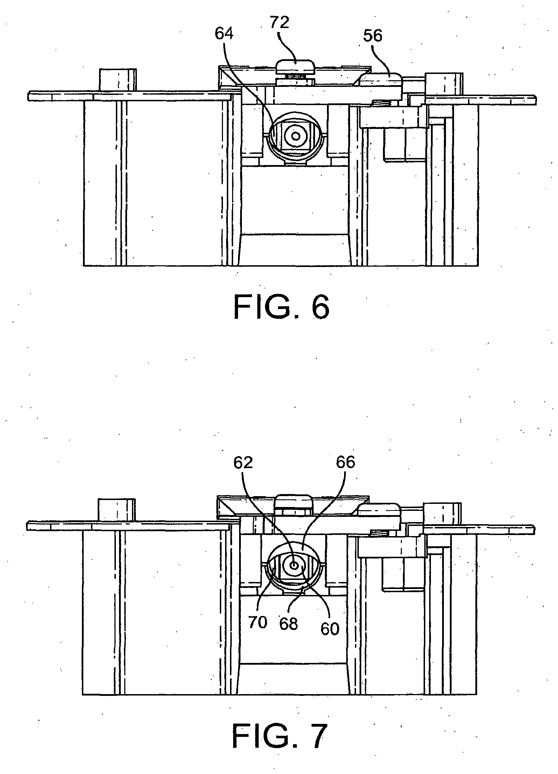

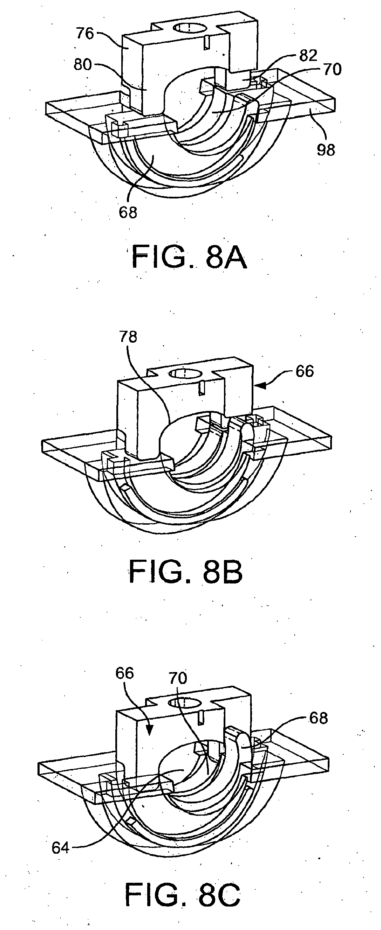

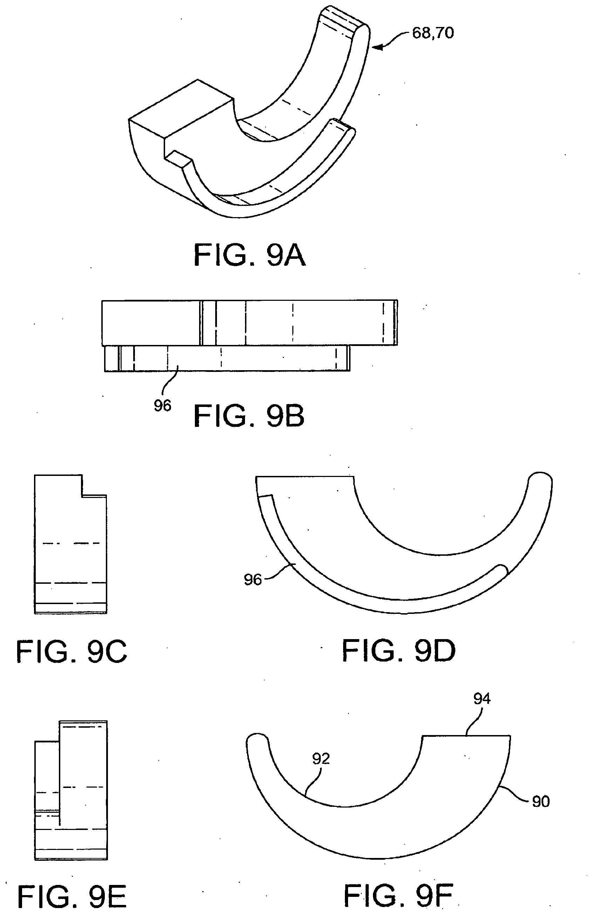

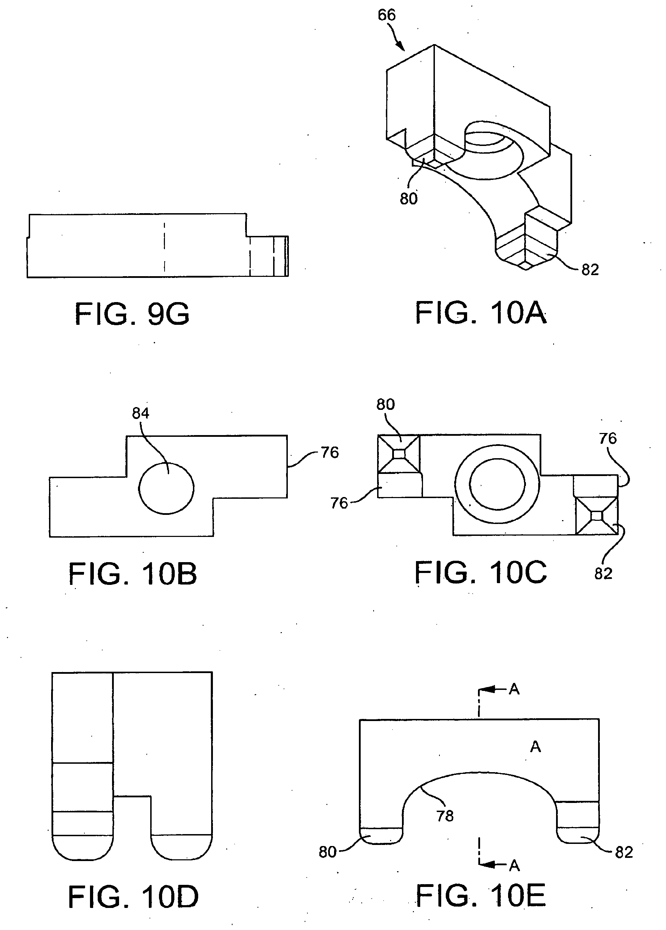

The clamp includes three cooperating gripper members moveable relative to the clamp body to define a progressively constrictable aperture 64 (see Figures 6, 7 and 8) surrounding a cable passing through the opening 58 to grip and secure the cable in place. The gripper members include a top gripper member 66 (the first gripper member), as shown particularly in Figure 8, 10 and 12, arranged for linear sliding movement relative to the clamp closure portion 54. The gripper members further include two similar rotating insert gripper members 68, 70 (the second gripper member), as shown particularly in Figures 8 and 9, arranged for rotary sliding movement relative to the clamp main body portion 52, with the gripper members 68 and 70 moving in opposite senses to each other in response to downwards movement of gripper member 66 under the action of a captive gripper screw 72, as will be described below.

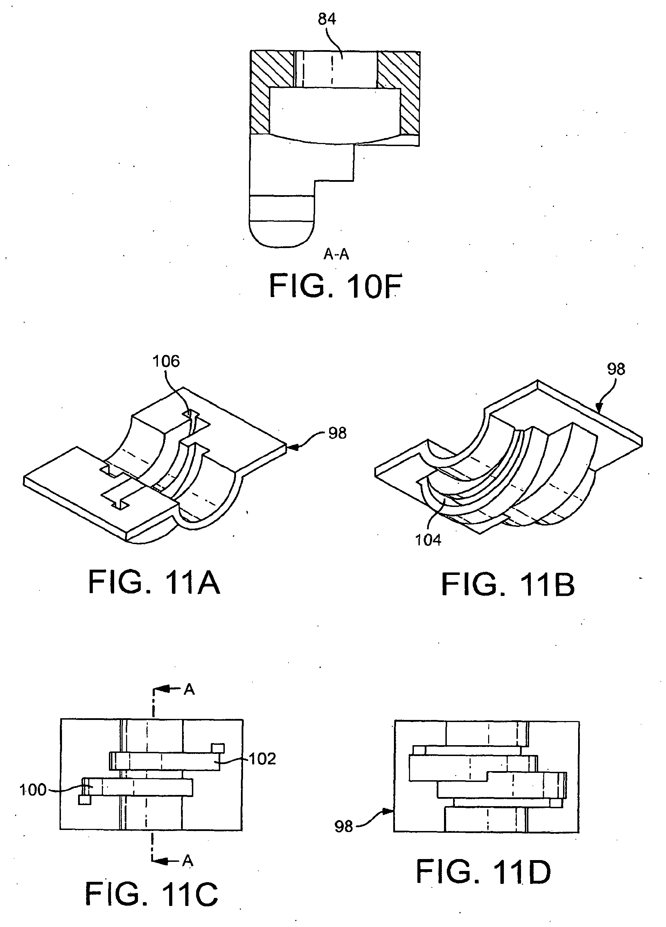

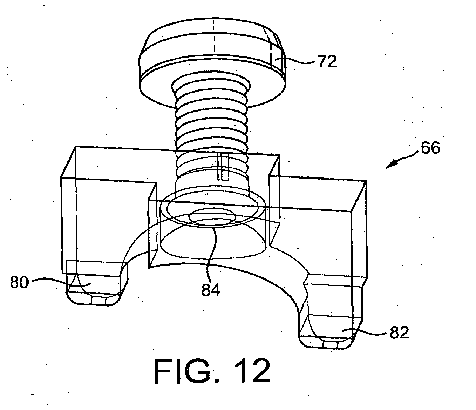

Considering the construction in more detail, the clamp closure portion 54 includes two downwardly depending limbs 74, shown in Figures 4 to 8, the opposed inner faces of which include elongate recesses defining linear tracks in which opposed edge faces 76 of the top gripper member 66 can slide. As shown in Figure 10, the gripper member 66 includes a curved cable-engaging lower face 78 forming part of the aperture 64, with offset downwardly extending prongs 80, 82, each for engaging a respective rotating gripper member 68, 70, as will be described below. A centre hole 84 is formed in the member 66 for receiving the captive gripper screw 72 (Figure 12), the screw also passing through an aligned hole in the clamp closure portion 54, so that tightening of the screw 72 causes downward movement of the gripper member 66 relative to the clamp body. The end of the captive screw 72 is not threaded to allow it to rotate in the top gripper member 66, with the tip of the screw being flattened once assembled to stop it withdrawing from the gripper element and thus hold it captive.

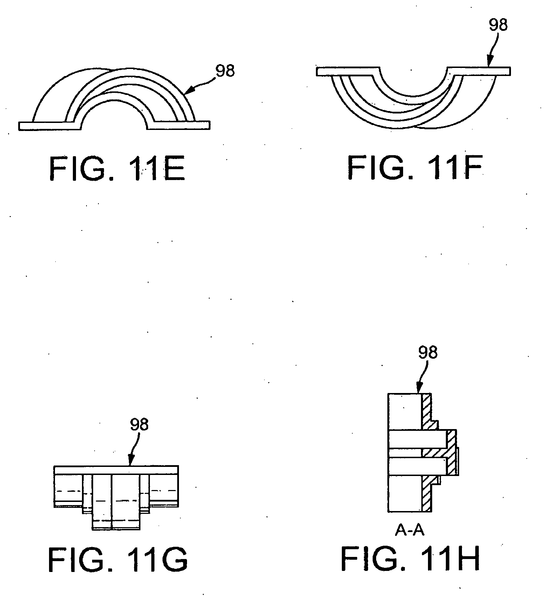

As shown in Figure 9, the rotating gripper members 68, 70 have a part circular cylindrical outer face 90 and a smaller diameter part circular cylindrical cable-engaging inner face 92 that forms part of the aperture 64, with the cylinders having offset centers so that the gripper member is of tapered, concave form. The rotating gripper members have a planar actuating face 94 and include a part circular flange 96 extending from a side wall, adjacent outer face 90. The gripper members 68, 70 are mounted in a profiled element 98, shown best in Figures 8 and 11, that is carried in and forms part of the main body portion 52. The element 98 includes two similar part circular cylindrical recessed tracks 100, 102 within which the gripper members 68, 70 are arranged for rotary sliding movement in opposite senses to each other in offset planes, with the gripper flanges 96 being located in arcuate slots 104, 106 in element 98 to act as guides. The radius of the face 90 is the same as the radius of tracks 100, 102.

As shown in Figure 8, the free ends of the offset prongs 80, 82 of the top gripper member 66 contact an actuating face 94 of a respective rotating gripper members 68, 70. Linear sliding movement of the gripper member 66 in a downwards direction as shown in the figures, produced by tightening of screw 72, causes the rotating gripper member 68, 70 to undergo rotary sliding movement along the tracks 100, 102 in the element 92, with the members 68, 70 moving in opposite senses to each other, member 68 moving in an anti-clockwise direction and member 70 moving in a clockwise direction as seen in the figures to produce overlapping of the cable-engaging faces 92. Because of the tapered form of the members 68, 70, the rotary sliding movement results in the progressive reduction or constriction of the aperture 64, as shown in Figures 8A to 8C and also Figures 5, 6 and 7.

In use of the clamp, an end of a coaxial cable (not shown) is inserted into the clamp, with the folded back braid on the outer sheath resting on the rotating gripper members 68, 70 and the centre conductor mated with contact 62. The closure portion 54 is hinged closed and the closure screw 56 tightened to secure the body portions 52, 54 together, defining circular opening 58 surrounding the cable. The gripper screw 72 is then tightened, forcing the offset prongs 80, 82 of the top gripper member 66 down onto the rotating gripper members 68, 70, causing rotary sliding movement of the gripper members 68, 70 to constrict the aperture 64. The screw 72 is tightened to a sufficient extent to grip the cable firmly, depending on the diameter of the cable. The constrictable aperture 64 produced in this way by the three gripper members can thus adapt to grip the exterior of coaxial cables of different diameters. Because the gripper members grip the cable from three sides, with curved faces, in a configuration approximating to circular, the circular profile of the cable is not distorted and an effective RF seal can be maintained.

The cable clamp may be made of rigid moulded plastics materials, in known manner.

The preferred embodiment described above may be modified in various ways.

For example, in place of the captive gripper screw 72 extending through hole 84, a normal screw with associated return spring may be used with a non-apertured gripper member 66, with the screw bearing down on the upper surface of the gripper member 66.

Further, the clamp of the invention may be incorporated in an item of CATV equipment, such as a cable signal receiver box, or in another intermediate component rather than being incorporated in a cable wall outlet.

## Claims

1. A cable clamp comprising a clamp body (50) defining an opening (58) for receiving a cable, and three or more gripper members (66, 68, 70) moveable relative to the clamp body to define a constrictable aperture (64) surrounding the cable in the opening, the gripper members comprise a first gripper member (66) arranged for linear sliding movement with respect to the clamp body (50) and at least two second gripper members (69) arranged for rotary sliding movement with respect to the clamp body (50), **characterised in that** a pair of similar second gripper members (68, 70) of tapered form are provided for rotary movement in opposite senses, such that, because of the tapered form of the second gripper members, the rotary sliding movement results in the progressive reduction or constriction of the aperture.

2. A clamp according to claim 1, wherein the cable opening (58) is of circular form.

3. A clamp according to claim 1 or 2, wherein the gripper members (66, 68, 70) have a curved cable-engaging face.

4. A clamp according to claim 1, 2 or 3, wherein the gripper members (66, 68, 70) are mounted within the clamp body (50), for movement relative thereto.

5. A clamp according to any one of the preceding claims, wherein the gripper members (66, 68, 70) are mechanically interconnected so that they move together to constrict the aperture (64).

6. A clamp according to any one of the preceding claims, wherein the second gripper members are arranged to slide on a circular cylindrical track (100, 102).

7. A clamp according to claim 6, wherein the second gripper member (70) has a circular cylindrical outer face (90) for sliding on the track and a smaller radius inner circular cylindrical cable-engaging face (92), with the two cylinders having offset centres to produce a tapered form.

8. A clamp according to any one of the preceding claims, wherein the second gripper members are located in a cylindrical recess in the clamp body.

9. A clamp according to claim 8, wherein the clamp body includes a part circular guide for the second gripper members.

10. A clamp according to any one of the preceding claims, wherein the first gripper member includes a portion for engaging an associated second gripper member and causing rotary sliding movement thereof on linear sliding movement of the first gripper member.

11. A clamp according to claim 10, wherein the first gripper member has a pair of offset projections (88, 82), each for engaging an associated second gripper member.

12. A clamp according to any one of the preceding claims, wherein the first gripper member (66) is located in a slot-shaped recess in the clamp body, for linear sliding movement.

13. A clamp according to any one of the preceding claims, wherein linear sliding movement of the first gripper (66) member is produced by tightening a threaded member (72) associated with the first gripper member.

14. A clamp according to any one of the preceding claims, wherein the clamp body (50) comprises two or more components, including a main body portion (52) and a clamp closure portion moveable (54) relative thereto.

15. A cable television component comprising a clamp in accordance with any one of the preceding claims.

## Patentansprüche

1. Kabelklemme mit einem Klemmenkörper (50), der eine Öffnung (58) zur Aufnahme eines Kabels definiert, und mit zwei oder mehr Greifelementen (66, 68, 70), die relativ zum Klemmenkörper beweglich sind, um eine Öffnung (64) zu definieren, die verengt werden kann und das Kabel in der Öffnung umgibt, wobei die Greifelemente ein erstes Greifelement (66), das für eine lineare Gleitbewegung in Bezug auf den Klemmenkörper (50) angeordnet ist, und mindestens zwei zweite Greifelemente (69) umfassen, die für eine rotierende Gleitbewegung in Bezug auf den Klemmenkörper (50) angeordnet sind, **dadurch gekennzeichnet, dass** ein Paar ähnlicher zweiter Greifelemente (68, 70) mit konischer Form zur Drehbewegung in entgegengesetzten Richtungen vorgesehen ist, so dass die rotierende Gleitbewegung durch die konische Form der zweiten Greifelemente zur progressiven Reduzierung oder Verengung der Öffnung führt.

2. Klemme nach Anspruch 1, wobei die Kabelöffnung (58) eine kreisrunde Form aufweist.

3. Klemme nach Anspruch 1 oder 2, wobei die Greifelemente (66, 68, 70) eine gewölbte Fläche aufweisen, die das Kabel in Eingriff nimmt.

4. Klemme nach Anspruch 1, 2 oder 3, wobei die Greifelemente (66, 68, 70) innerhalb des Klemmenkörpers (50) für eine Bewegung relativ dazu angebracht sind.

5. Klemme nach einem der vorhergehenden Ansprüche, wobei die Greifelemente (66, 68, 70) mechanisch miteinander verbunden sind, so dass sie sich zusammen bewegen, um die Öffnung (64) zu verengen.

6. Klemme nach einem der vorhergehenden Ansprüche, wobei die zweiten Greifelemente so angeordnet sind, dass sie auf einer kreisrunden zylindrischen Bahn (100, 102) gleiten.

7. Klemme nach Anspruch 6, wobei das zweite Greifelement (70) eine kreisrunde zylindrische Außenfläche (90) zum Gleiten auf der Bahn und eine innere kreisrunde zylindrische Fläche (92) mit kleinerem Radius aufweist, die das Kabel in Eingriff nimmt, wobei die beiden Zylinder versetzte Mittelpunkte aufweisen, um eine konische Form zu erzeugen.

8. Klemme nach einem der vorhergehenden Ansprüche, wobei die zweiten Greifelemente in einer zylindrischen Aussparung in dem Klemmenkörper positioniert sind.

9. Klemme nach Anspruch 8, wobei der Klemmenkörper eine teilweise kreisrunde Führung für die zweiten Greifelemente einschließt.

10. Klemme nach einem der vorhergehenden Ansprüche, wobei das erste Greifelement einen Abschnitt einschließt, um ein zugehöriges zweites Greifelement in Eingriff zu nehmen und eine rotierende Gleitbewegung davon bei einer linearen Gleitbewegung des ersten Greifelements zu verursachen.

11. Klemme nach Anspruch 10, wobei das erste Greifelement ein Paar von versetzten Vorsprüngen (88, 82) aufweist, wobei jeder dazu dient, ein zugehöriges zweites Greifelement in Eingriff zu nehmen.

12. Klemme nach einem der vorhergehenden Ansprüche, wobei das erste Greifelement (66) in einer schlitzförmigen Aussparung in dem Klemmenkörper für eine lineare Gleitbewegung positioniert ist.

13. Klemme nach einem der vorhergehenden Ansprüche, wobei eine lineare Gleitbewegung des ersten Greifelements (66) durch Anziehen eines Gewindeelements (72) erzeugt wird, das dem ersten Greifelement zugehörig ist.

14. Klemme nach einem der vorhergehenden Ansprüche, wobei der Klemmenkörper (50) zwei oder mehrere Bauteile umfasst, die einen Hauptkörperabschnitt (52) und einen Klemmenverschlussabschnitt (54), der relativ dazu beweglich ist, einschließen.

15. Kabelfernsehbauteil, das eine Klemme nach einem der vorhergehenden Ansprüche aufweisst.

## Revendications

1. Serre-câble comprenant un corps (50) de collier délimitant une ouverture (58) pour recevoir un câble et trois ou plusieurs éléments de préhension (66, 68, 70) mobiles par rapport au corps de collier pour délimiter une ouverture (64) pouvant être étranglée et entourant le câble dans l'ouverture, les éléments de préhension comprenant un premier élément de préhension (66) agencé pour se déplacer par coulissement linéaire par rapport au corps (50) de collier et au moins deux seconds éléments de préhension (69) agencés pour se déplacer par coulissement rotatif par rapport au corps (50) de collier, **caractérisé en ce qu'**une paire de seconds éléments de préhension (68, 70) de forme effilée sont prévus pour un mouvement de rotation dans des sens contraires de telle sorte que du fait de la forme effilée des seconds éléments de préhension, le mouvement de coulissement rotatif entraîne la réduction progressive ou l'étranglement progressif de l'ouverture.

2. Serre-câble selon la revendication 1, dans lequel l'ouverture (58) de câble est de forme circulaire.

3. Serre-câble selon la revendication 1 ou 2, dans lequel les éléments de préhension (66, 68, 70) comportent une face d'appui sur le câble courbe.

4. Serre-câble selon la revendication 1, 2 ou 3, dans lequel les éléments de préhension (66, 68, 70) sont montés à l'intérieur du corps (50) de collier de façon à se déplacer par rapport à lui.

5. Serre-câble selon l'une quelconque des revendications précédentes, dans lequel les éléments de préhension (66, 68, 70) sont raccordés mécaniquement entre eux si bien qu'ils se déplacent ensemble pour étrangler l'ouverture (64).

6. Serre-câble selon l'une quelconque des revendications précédentes, dans lequel les seconds éléments de préhension sont agencés pour coulisser sur une piste cylindrique circulaire (100, 102).

7. Serre-câble selon la revendication 6, dans lequel le second élément de préhension (70) comporte une face extérieure (90) cylindrique circulaire pour coulisser sur la piste et une face intérieure (92) d'appui sur le câble cylindrique circulaire de plus petit rayon, les deux cylindres ayant des axes décalés pour créer une forme effilée.

8. Serre-câble selon l'une quelconque des revendications précédentes, dans lequel les seconds éléments de préhension sont situés dans un évidement cylindrique dans le corps de collier.

9. Serre-câble selon la revendication 8, dans lequel le corps de collier comprend un guide en partie circulaire pour les seconds éléments de préhension.

10. Serre-câble selon l'une quelconque des revendications précédentes, dans lequel le premier élément de préhension comprend une partie conçue pour entrer en prise avec un second élément de préhension associé et le faire se déplacer par coulissement rotatif lorsque le premier élément de préhension se déplace par coulissement linéaire.

11. Serre-câble selon la revendication 10, dans lequel le premier élément de préhension comporte une paire de saillies (88, 82) décalées, conçues chacune pour entrer en prise avec un second élément de préhension associé.

12. Serre-câble selon l'une quelconque des revendications précédentes, dans lequel le premier élément de préhension (66) est situé dans un évidement en forme de fente dans le corps de collier, pour se déplacer par coulissement linéaire.

13. Serre-câble selon l'une quelconque des revendications précédentes, dans lequel on provoque le mouvement de coulissement linéaire du premier élément de préhension (66) en serrant un élément fileté (72) associé au premier élément de préhension.

14. Serre-câble selon l'une quelconque des revendications précédentes, dans lequel le corps (50) de collier comprend deux ou plusieurs composants, incluant une partie principale (52) de corps et une partie (54) de fermeture de collier mobile par rapport à celle-là.

15. Composant de télévision par câble comprenant un serre-câble selon l'une quelconque des revendications précédentes.
